# EUROPEAN PATENT SPECIFICATION

(11) **EP 1 798 668 B1**
(45) Date of publication and mention of the grant of the patent: **25.01.2012**
(21) Application number: 06024827.5
(22) Date of filing: 30.11.2006
(51) Int. Cl.: G06K 13/08

(54) **Card processor**
Kartenprozessor
Processeur de carte

(30) Priority: 13.12.2005 JP 2005359621
(43) Date of publication of application: 20.06.2007
(73) Proprietor: Hitachi-Omron Terminal Solutions, Corp., Shinagawa-ku Tokyo 141-0032 (JP)
(72) Inventor: Tadamasa, Akihiro, Shinagawa-ku Tokyo 141-0032 (JP)
(74) Representative: Strehl Schübel-Hopf & Partner

(56) References cited:
- EP-A- 1 067 474
- EP-A- 1 139 309
- EP-A- 1 394 728
- EP-A2- 0 780 814
- GB-A- 2 293 476

## Description

### BACKGROUND OF THE INVENTION

### FIELD OF THE INVENTION

The present invention relates to a card processor (reader) for processing a card recorded with magnetic information.

### DESCRIPTION OF THE RELATED ART

A card processor for processing a magnetic card recorded with magnetic information is mounted in an automatic cash depositing/paying machine (hereinafter called "ATM") in banks. In the card processor, as a magnetic card is inserted into a card slot, the magmatic card is transported at a constant speed by transport means such as a motor and transport rollers, and a magnetic head reads magnetic information recorded on a magnetic stripe of the card. In addition to information read, the card processor writes information when necessary. As the read/write process is completed for the card, the card is ejected out to an external by transport means.

In front of a true card processor mounted in ATM installed in banks or the like, a false card reader (skimmer) is installed in some cases in an attempt to illegally acquire card information of a magnetic card. This skimmer is equipped with a memory for storing information read from the magnetic card. As a user inserts a magnetic card into a card slot of the skimmer, without knowing an installation of such a skimmer or erroneously recognizing that the skimmer is a portion of a true card processor, information on the magnetic card is recorded by the skimmer and stored in the memory. The magnetic card inserted into the skimmer is transported to the true card processor whereat a usual card read process is executed. In this case, so long as the magnetic card is not a false card, the normal process is executed in ATM. After the card process is completed, the true card processor ejects the magnetic card and returns it to the user via the card slot of the skimmer. Since the card is returned normally, the user is difficult to notice that the card information was read illegally. Furthermore, card information may be read by the skimmer while the card is returned. A person who installed the skimmer dismounts it from ATM, reads illegally read card information from the memory, and forges a card in accordance with the card information.

Unauthorized acquisition of card information with such a skimmer is called "skimming". As a countermeasure for preventing skimming, there is a technique of intermittently transporting a magnetic card while it is inserted or ejected (for example, refer to JP-A-2005-128668, JP-A-2004-171205, and J. Svigals: "Unauthorized Card Stripe Reading Inhibitor", IBM TECHNICAL DISCLOSURE BULLETIN, vol. 26, No. 6, Nov. 1, 1983, page 2707 XP002145300, NewYork). Further, there is a technique of transporting a magnetic card randomly and intermittently in order to hinder skimming by further complicating intermittent transportation of a magnetic card (for example, refer to US. Patent No. 6,460,771). Furthermore, there is a technique of temporarily stopping transportation of a magnetic card during insertion or ejection of the magnetic card in the state that a portion of the card is partially projected from a card slot to an external (For example, refer to JP-A-2001-22894). Generally, in order to read correctly information recorded on a magnetic stripe of a magnetic card, it is necessary to move the card at a constant speed relative to a magnetic head. If the magnetic card is intermittently transported or temporarily stopped as described above, it becomes impossible to read correctly record information from the magnetic stripe so that unauthorized acquisition of card information by skimming can be prevented to some extent.

A card processor related to the above-mentioned prior art is disclosed in EP-A-1067474. A card processor with the features of the preamble of claim 1 is disclosed in EP-A2-0780814.

### SUMMARY OF THE INVENTION

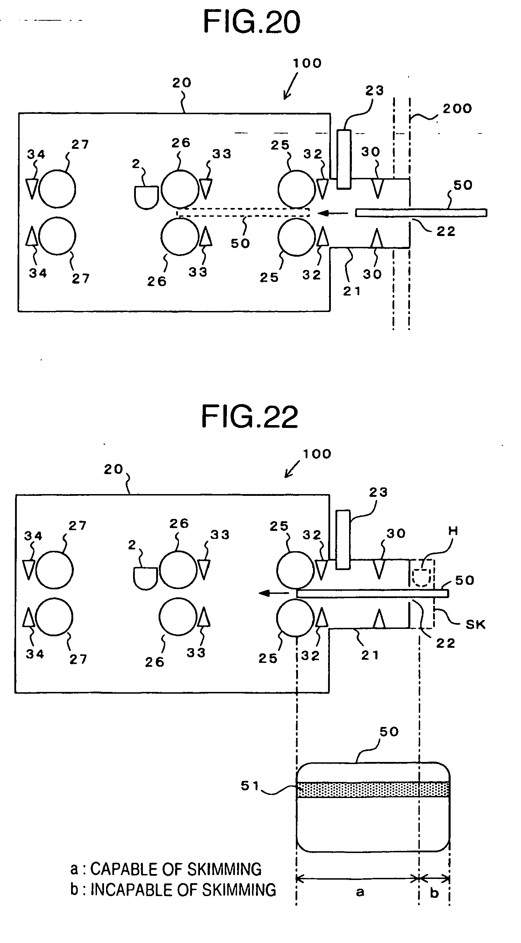

Fig. 20 is a schematic diagram showing an example of the structure of a card processor 100 mounted in ATM or the like. The card processor 100 is constituted of: a main body 20 thereof; a card insertion unit 21 mounted on the front side of the main body 20; a card slot 22 into which a magnetic card 50 is inserted; a shutter 23 for regulating insertion or ejection of the magnetic card 50; transport rollers 25 to 27 for transporting the magnetic card 50; sensors 30, 32 to 34 for detecting the magnetic card 50 and a magnetic head 2 for reading information recorded in the magnetic card 50. The card processor 100 mounted in ATM or the like is generally equipped with the card insertion unit 21. The card insertion unit 21 is a functionally essential unit for coupling the card processor 100 to a housing 200 of ATM or the like and assembling therein the card detection sensor 30, shutter 23 and the like. Existence of the card insertion unit 21 provides a length of several 10 mm from the card slot 22 to the transport rollers 25.

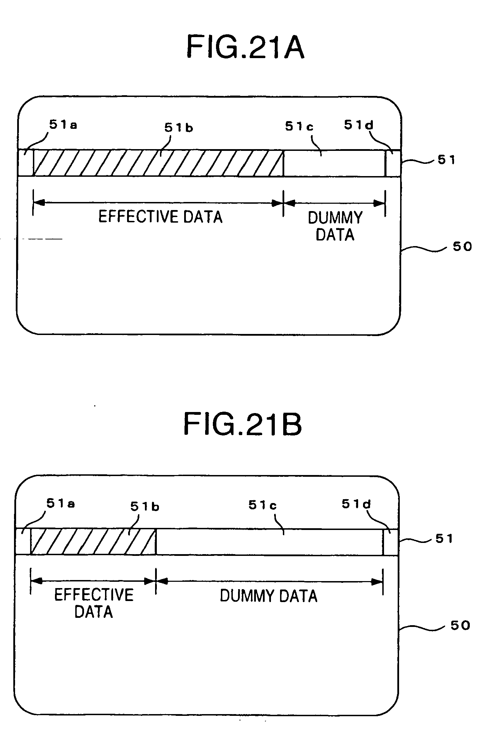

Information is recorded on a magnetic stripe of the magnetic card 50, generally at the front end portion of the card. Figs. 21A and 21B are diagrams showing an information record format in the case that the magnetic card 50 is a cash card. A magnetic stripe 51 is constituted of a field 51a where start code is recorded, a field 51b where effective data is recorded, a field 51c where dummy data is recorded, and a field 51d where end code is recorded. The effective data record field 51b records data necessary for transaction processes such as a bank number, a branch number, an account number and a card type, and the dummy data record field 51c records meaning-less data such as "00000,,,". Which type of information is recorded on the magnetic stripe 51 can be selected by monetary institutes to some extent. Therefore, there are a magnetic card 50 (cash card) having a large amount of effective data such as shown in Fig. 21A and a magnetic card 50 (cash card) having a small amount of effective data such as shown in Fig. 21B.

Therefore, in the card processor 100 equipped with the above-described card insertion unit 21, as shown in Fig. 22, if a false reader (skimmer) SK is mounted on the card slot 22, information recorded on the magnetic stripe 51 in a range a is skimmed with a magnetic head H built in the skimmer SK before the inserted magnetic card 50 reaches the transport rollers 25, because intermittent transportation of the transport rollers 25 will not start until the front end of the magnetic card 50 is detected with the sensor 32 according to conventional techniques. Only information in a range b will not be skimmed after the start of intermittent transportation. As a result, most of information recorded in the magnetic card 50 is read illegally. 70 % to 80 % of information on the magnetic stripe 51 is read illegally depending upon a length of the card insertion unit 21, a distance from the card insertion unit 21 to the transport rollers 25, and a position of the magnetic head H of the skimmer SK. As a result, particularly in the case of the magnetic card 50 having a small effective data field such as shown in Fig. 21B, all effective data is skimmed before card intermittent transportation even if intermittent transportation is performed. Not only during card insertion, but also during card ejection, while the magnetic card 50 is pulled out by a hand after it passed through the transport rollers 25, most of information recorded in the magnetic card 50 is read from the same reason described above.

An issue addressed by the present invention is therefore to effectively prevent unauthorized acquisition of card information by a skimmer mounted on a card slot of a card processor provided with a magnetic card intermittent transportation function.

The card processor of the present invention for processing a card recorded with magnetic information is defined in claim 1. Further advantageous features are set out in the dependent claims.

The second transport means for intermittently transporting the card is mounted near the card slot so that the card can be intermittently transported generally at the same time when the card is inserted. Accordingly, even if a skimmer is mounted on the card slot, there is almost no risk that card information is skimmed until the card reaches the first transport means. Also when the card is ejected, the card can be transported intermittently approximately at the same time when the card reaches the card slot. Therefore, at the stage when the card is pulled out with a hand, there is almost no risk that the card information is skimmed with the skimmer.

Intermittent transportation of the present invention includes not only intermittent transportation of a regular period but also intermittent transportation of an irregular period. Intermittent transportation of the present invention includes not only intermittent transportation only in one direction but also intermittent transportation alternately repeating motions in one direction and in another direction to move eventually in one direction. When a card is fetched, it is desired to perform intermittent transportation only at an initial stage in order to shorten a fetch time. However, the present invention does not exclude that intermittent transportation is performed during the period from the start to the end of card fetch. Similarly, when a card is ejected, it is desired to perform intermittent transportation only at a final stage in order to shorten an eject time. However, the present invention does not exclude that intermittent transportation is performed during the period from the start to the end of card ejection. Intermittent transportation may be performed during one of card fetch and card ejection or during both.

According to the present invention, it is substantially impossible to read information recorded in a card during card insertion or ejection with a skimmer mounted on a card slot of a card processor equipped with the card insertion unit. It is therefore possible to more effectively prevent skimming even for a magnetic card having a small amount of effective data.

Other objects, features and advantages of the invention will become apparent from the following description of the embodiments of the invention taken in conjunction with the accompanying drawings.

### BRIEF DESCRIPTION OF THE DRAWINGS

Fig. 1 is a schematic diagram showing the structure of a card processor according to a first embodiment of the present invention.
Fig. 2 is a diagram showing a magnetic card.
Fig. 3 is a block diagram illustrating an electrical structure of the card processor.
Fig. 4 is a flow chart illustrating the outline operation of the card processor.
Fig. 5 is a flow chart illustrating the detailed procedure of a card fetch/read process.
Fig. 6 is a flow chart illustrating the detailed procedure of a card ejection process.
Figs. 7A to 7H are diagrams illustrating a card fetch/read operation.
Figs. 8A to 8F are diagrams illustrating a card ejection operation.
Fig. 9 is a diagram illustrating skimming according to the present invention.
Fig. 10 is a schematic diagram showing the structure of a card processor according to a second embodiment of the present invention.
Fig. 11 is a flow chart illustrating the detailed procedure of a card fetch/read process.
Fig. 12 is a flow chart illustrating the detailed procedure of a card ejection process.
Figs. 13A to 13H are diagrams illustrating a card fetch/read operation.
Figs. 14A to 14F are diagrams illustrating a card ejection operation.
Fig. 15 is a schematic diagram showing the structure of a card processor according to a third embodiment of the present invention.
Fig. 16 is a flow chart illustrating an outline operation of the card processor.
Fig. 17 is a schematic structural diagram showing another example of sensors.
Figs. 18A to 18D show examples of a control amount applied to a motor.
Figs. 19A to 19D are diagrams illustrating an intermittent rotation operation of a motor.
Fig. 20 is a schematic diagram showing an example of a structure of a card processor.
Figs. 21A and 21B are diagrams illustrating record information of cards.
Fig. 22 is a diagram illustrating skimming in a structure according to Fig. 20.

### DESCRIPTION OF THE EMBODIMENTS

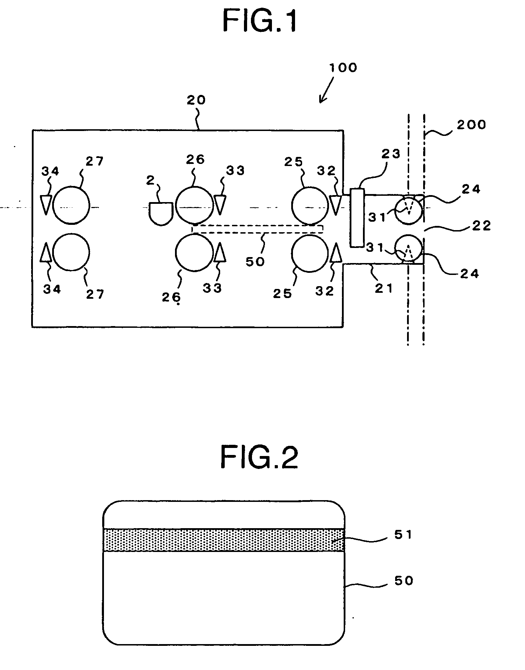

Fig. 1 is a diagram showing the overall structure of a card processor according to the first embodiment of the present invention. Referring to Fig. 1, a card processor 100 is mounted on, e.g., an ATM. Reference numeral 200 represents a housing of ATM. A card 50 to be processed by the card processor 100 is a magnetic card having a magnetic stripe 51 such as shown in Fig. 2. Reference numeral 20 represents a main body of the card processor 100, reference numeral 21 represents a card insertion unit mounted on the front side of the main body 20, and reference numeral 22 represents a card slot into which the card 50 is inserted. Reference numeral 23 represents a shutter which is opened and closed by a solenoid to be later described in an up/down direction as viewed in the figure, to thereby regulate advancement of the card 50 from the card slot 22 to the inside of the main body 20 and ejection of the card 50 from the inside of the main body 20 to the card slot 22.

Reference numerals 24 to 27 each represent a pair of upper and lower transport rollers which transport the card 50 in a right/left direction as viewed in the figure by normal/reverse rotation of a motor to be described later. The transport rollers 25 to 27 are mounted inside the main body 20 and constitute first transport means according to the embodiment of the present invention. The transport rollers 24 are mounted near the card slot 22 of the card insertion unit 21 and constitute second transport means according to the embodiment of the present invention. In the present invention, the card processor is divided into the main body (inside the card processor) 20 and the insertion unit (outside the card processor) 21 by using as the reference the shutter 23 and sensor 32 shown in the figure.

Reference numerals 31 to 24 represent card detection sensors each constituted of a photo microsensor provided with a pair of upper and lower light projection and reception elements. The sensor 31 is positioned near the card slot 22 of the card insertion unit 21 at generally the same position as that of the transport rollers 24, and constitutes detection means according to the embodiment of the present invention. The sensors 23 to 34 are mounted inside the main body 20. The sensor 32 is disposed just before the transport rollers 25, the sensor 33 is disposed just before the transport rollers 26, and the sensor 34 is disposed just after the transport rollers 27, respectively as viewed from the card slot 22. Reference numeral 2 represents a magnetic head for reading magnetic information from the magnetic stripe 51 of the card 50. The magnetic head 2 is disposed just after the transport rollers 26 as viewed from the card slot 22, and reads magnetic information by detecting a change in magnetic force of the magnetic stripe 51 during the state while the card 50 is transported by the rollers 26 and 27.

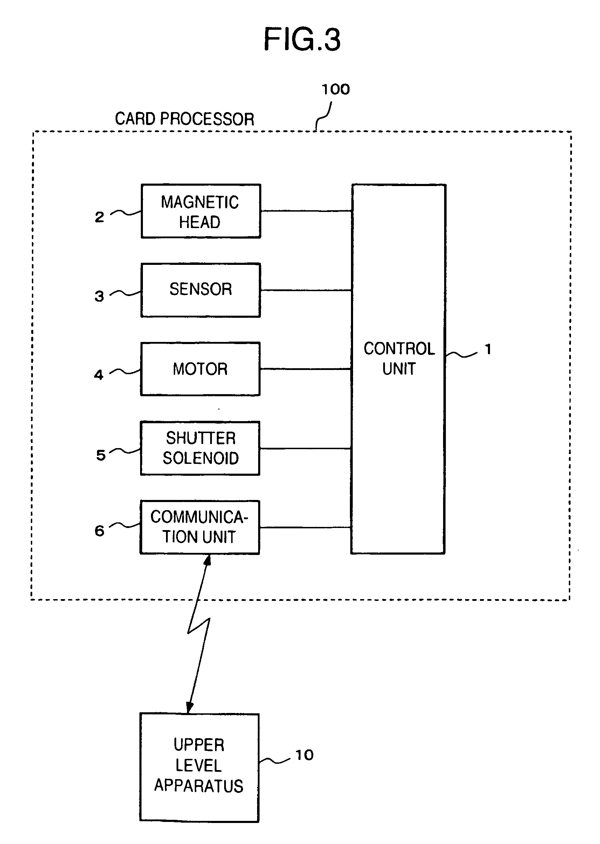

Fig. 3 is a block diagram showing the electrical structure of the card processor 100. In Fig. 3, reference numeral 1 represents a control unit for controlling each unit of the card processor. The control unit is constituted of a CPU, a ROM, a RAM, a control circuit to be described later and the like. ROM stores an operation program and the like for CPU, and RAM stores readable and writable control data and the like to be used for CPU to control each unit. Reference numeral 2 represents the magnetic head described with reference to Fig. 1, reference numeral 3 represents a sensor representative of all sensors 31 to 34 shown in Fig. 1, and reference numeral 4 represents a motor for rotating the transport rollers 24 to 27. The control unit 1 is provided with a motor control circuit for controlling and driving the motor 4. This motor control circuit drives the motor 4 for normal rotation or reverse rotation to rotate the transport rollers 24 to 27 and transport the card 50 along a predetermined direction. Reference numeral 5 represents a shutter solenoid for opening/closing the shutter 23. The control unit 1 is provided with a solenoid control circuit for controlling and driving the solenoid 5. The solenoid control circuit drives the solenoid 5 to open/close the shutter 23. Reference numeral 6 represents a communication unit for mutual communications with an upper level apparatus 10, the communication unit constituting communication means according to the embodiment of the present invention. The upper level apparatus 10 is, for example, ATM mounting the card processor 100. The control unit 1 transmits information read with the magnetic head 2 from the card 50 to the upper level apparatus 10 via the communication unit 6.

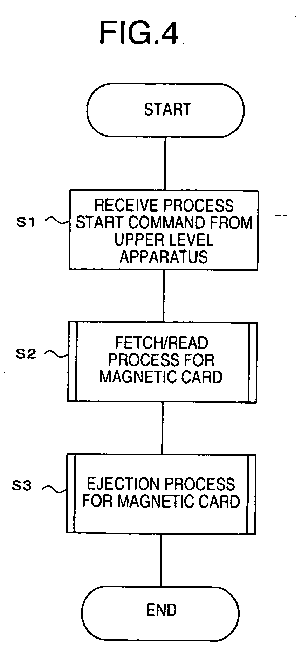

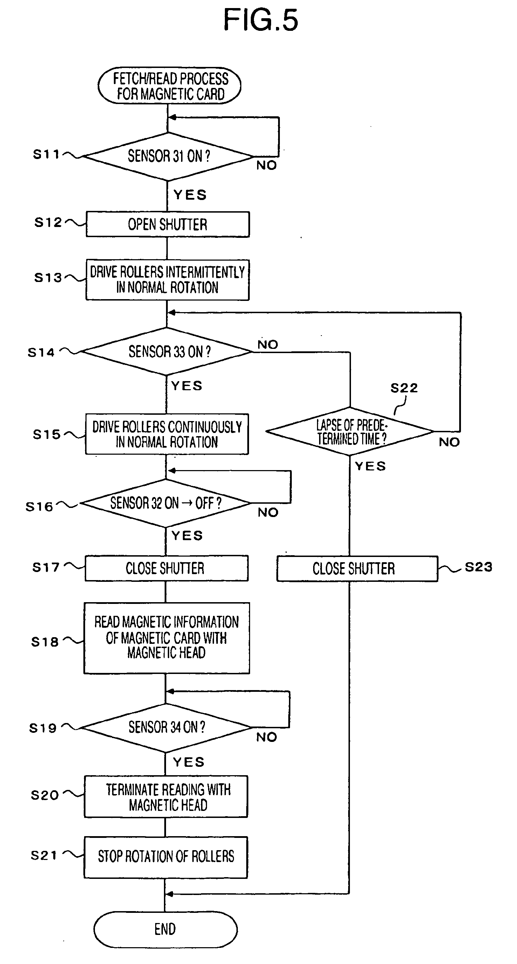

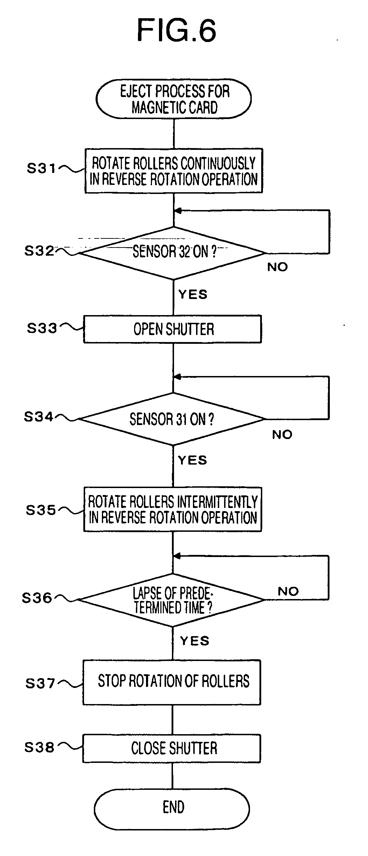

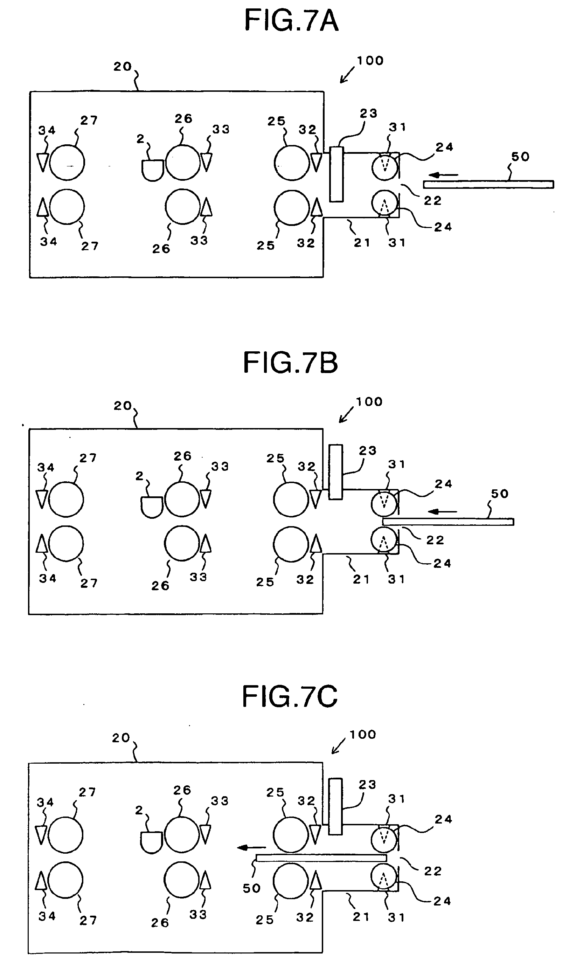

Figs. 4 to 6 are flow charts illustrating the operation procedure of the card processor 100. Each process is executed by CPU of the control unit 1. Fig. 4 illustrates the outline operation, and Figs. 5 and 6 illustrate the partial detailed procedures. Figs. 7A to 8F are diagrams showing the transport state of the card in the card processor 100. With reference to these figures, the operation of the card processor 100 will be described.

First, the overall outline operation will be described with reference to Fig. 4. It is assumed herein that the upper level apparatus 10 is ATM and the card processor 100 is mounted in ATM. As a transaction is to be conducted at ATM by using the card 50, a user performs a predetermined operation by using a customer panel, the upper level apparatus 10 transmits a process start command to the card processor 100 and the communication unit 6 receives this command (Step S1). Upon reception of this command, the card processor 100 fetches the card 50 and reads information recorded in the fetched card (Step S2). After these processes, the card processor executes an ejection process for the card 50 (Step S3) to terminate a series of processes after ejection.

Fig. 5 is a flow chart illustrating the detailed procedure of a magnetic card fetch/read process at Step S2 shown in Fig. 4. This procedure will now be described. The control unit 1 always monitors whether the sensor 31 mounted on the card slot 22 turns ON or not (Step S11). Fig. 7A shows the state before the card 50 is inserted into the card slot 22, and in this state, the sensor 31 is in an OFF state (NO at Step S11). In this figure, the housing 200 of ATM shown in Fig. 1 is shown omitted (similar to the following figures).

Next, as shown in Fig. 7B, as a user inserts the card 50 into the card slot 22 and the front end (left end) of the card 50 reaches the position of the sensor 31, the sensor 31 detects the card 50 and turns ON (YES at Step S11) so that the shutter solenoid 5 is driven and the shutter 23 opens (Step S12). In succession, the motor 4 is intermittently driven in a normal rotation so that the transport rollers 24 to 27 are also intermittently driven in the normal rotation (Step S13). As a result, the card 50 is fetched to the card insertion unit 21 while being transported intermittently by the transport rollers 24 immediately after inserted into the card slot 22.

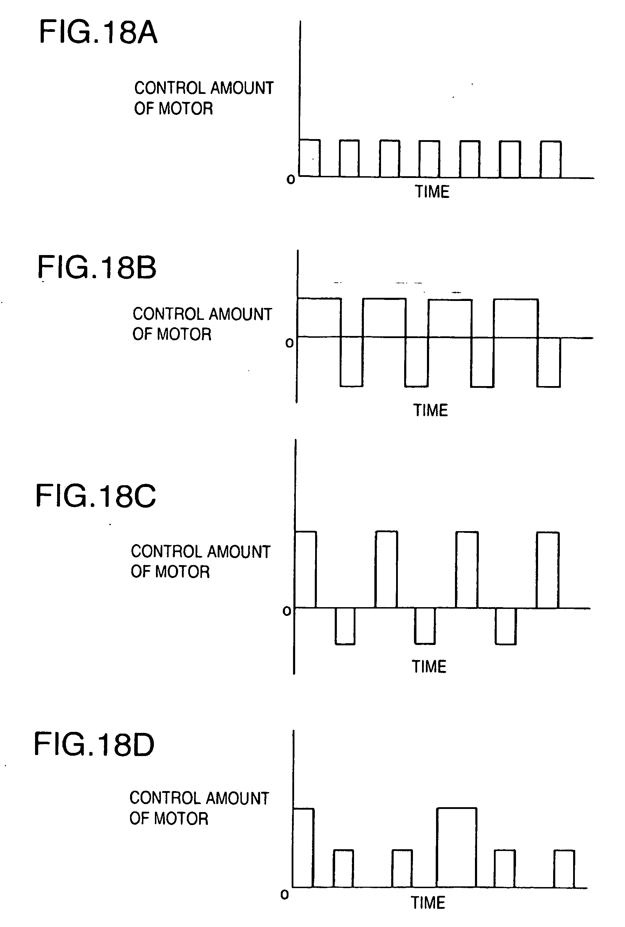

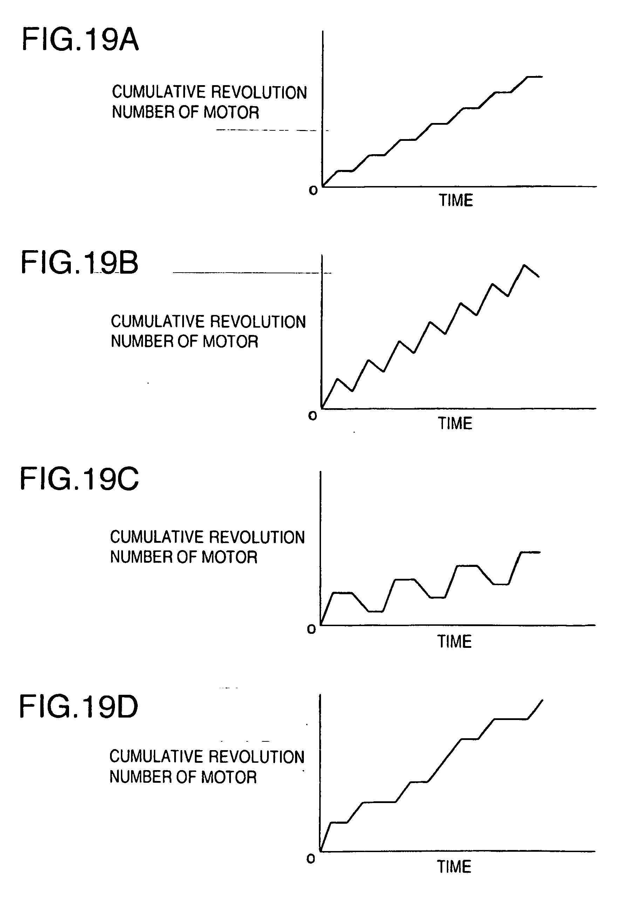

In this case, for example, a control amount (drive voltage) such as shown in Fig. 18A is supplied to the motor 4 from the motor drive circuit of the control unit 1, and the motor 4 performs an intermittent rotation operation such as shown in Fig. 19A. In the case of Fig. 19A, the motor 4 rotates by one unit rotation amount during one unit time, stops during the next one unit time, and repeats these operations. As a result, the card 50 transported to the position of the sensor 31 is transported intermittently in the left direction as viewed in the figure by the intermittently rotating transport rollers 24. The card 50 fetched from the card insertion unit 21 to the inside of the main body 20 is transported intermittently in succession in the left direction by the intermittently rotating transport rollers 25, as shown in Fig. 7C. During the stage while the card 50 is transported to the position of the transport rollers 25, the sensor 32 turns ON.

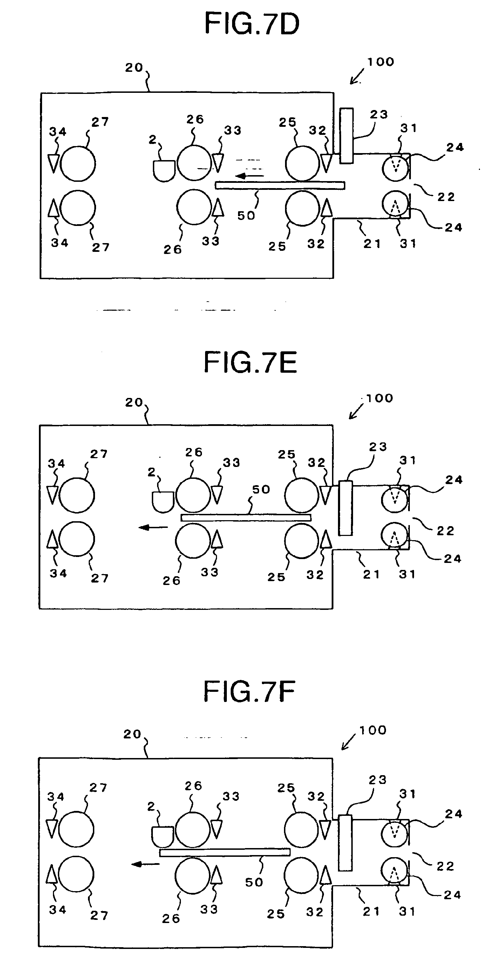

Next, it is judged whether the sensor 33 turns ON (Step S14). As shown in Fig. 7D, as the card 50 is transported to the position of the sensor 33, the sensor 33 detects the card 50 and turns ON (YES at Step S14). In response to this, driving the motor 4 is switched from intermittent driving to continuous driving so that the motor 4 is driven continuously in a normal rotation operation. The transport rollers 24 to 27 are therefore driven continuously in the normal rotation operation (Step S15). As a result, the card 50 is transported continuously in the left direction in the figure by the continuously rotating transport rollers 25 and 26. Next, it is judged whether the sensor 32 changes from ON to OFF (Step S16). As shown in Fig. 7E, as the back end (right end) of the card 50 passes through the sensor 32, the sensor 32 changes from ON to OFF (YES at Step S16). In response to this, the shutter solenoid 5 closes the shutter 23 (Step S17). As shown in Fig. 7F, as the card 50 reaches the position of the magnetic head 2, the magnetic head 2 starts reading magnetic information (information recorded in the magnetic stripe 51) of the card 50 (Step S18).

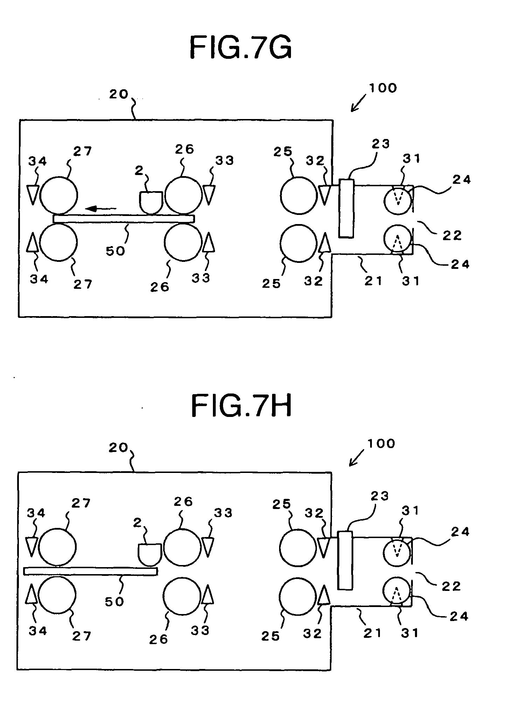

Thereafter, as shown in Fig. 7G, the card 50 is transported continuously by the transport rollers 26 and 27, and during this stage, magnetic information of the card 50 is read with the magnetic head 2. The control unit 1 judges whether the sensor 34 turns ON (Step S19). As shown in Fig. 7H, as the card 50 is transported to the position of the sensor 34, the sensor 34 detects the card 50 and turns ON (YES at Step S19). In response to this, magnetic information reading with the magnetic head 2 is terminated (Step S20). As the sensor 34 turns ON, the control unit 1 judges that the card 50 was transported to the innermost of the card processor 100, and stops the motor 4. Therefore, rotation of the transport rollers 24 to 27 stops also (Step S21).

If it is judged at Step S14 that the sensor 33 does not turn ON (NO at Step S14), it is judged whether a predetermined time has elapsed since the sensor 31 turned ON (Step S22). If the predetermined time has not elapsed (NO at Step S22), then the flow returns to Step S14 whereat the state of the sensor 33 is monitored. If the sensor 33 does not turn ON (NO at Step S14) and the predetermined time has elapsed (YES at Step S22), it is judged that the card 50 is not fetched to the inside of the main body 20, and the shutter solenoid 5 closes the shutter 23 (Step S23) to thereafter terminate the process.

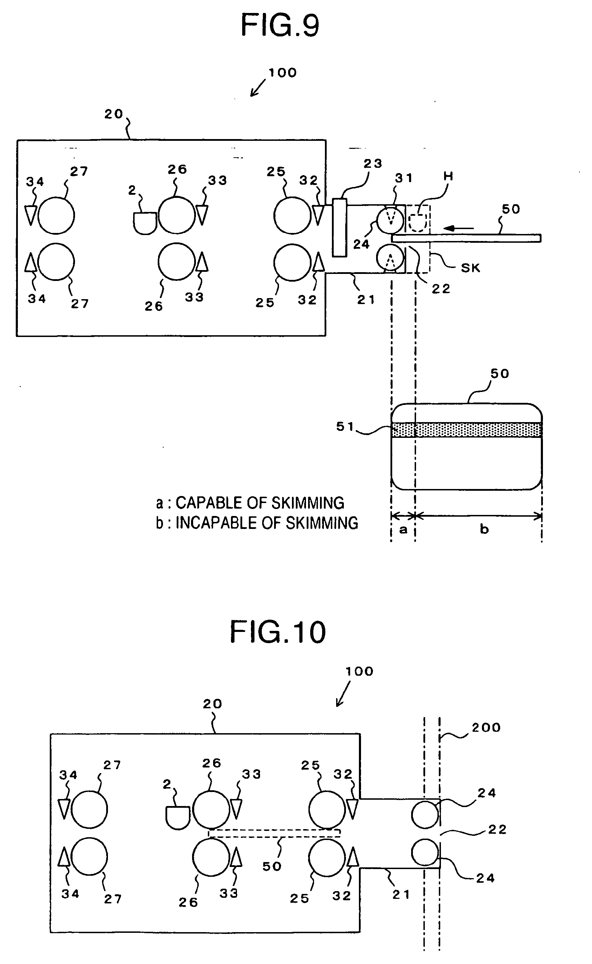

As described above, in the procedure shown in Fig. 5, approximately at the same time when the card 50 is inserted, the card 50 is transported intermittently by the transport rollers 24 mounted near the card slot 22. Therefore, as shown in Fig. 9, even if the skimmer SK is mounted on the card slot 22, information skimmed with a magnetic head H of the skimmer SK during card insertion is information to be read until the card 50 reaches the transport rollers 24, i.e., only little information recorded on the magnetic stripe 51 in a range (a), and most of information recorded in a range b will not be skimmed. It is therefore possible to prevent skimming during card insertion as much as possible, even if the card 50 has a small amount of effective data.

Further, in the procedure shown in Fig. 5, at the stage while the card 50 is fetched to the inside of the main body 20 of the card processor, the card 50 inserted into the card slot 22 is first transported intermittently, and after the card 50 is transported to the position of the sensor 33 in the main body 20, the card 50 is transported continuously. The position of the sensor 33 is set to a limit position where there is no risk that magnetic information of the card 50 is skimmed, i.e., to a front end (left end) position of the card 50 when the card 50 is fetched to the card insertion unit 21 at an inner position where magnetic information of the card 50 cannot be acquired normally with the skimmer SK. With this setting, the card 50 is transported intermittently in the state that there is a risk of magnetic information skimming, to thereby prevent skimming, whereas the card 50 is transported continuously in the state that there is no risk of magnetic information skimming, to thereby fetch the card to the inside of the main body 20 at high speed.

After driving the motor 4 is stopped, the control unit 1 transmits information read from the card 50 with the magnetic head 2 to the upper level apparatus 10 via the communication unit 6. In accordance with the received card information, the upper level apparatus 10 performs a predetermined transaction process (e.g., cash payment). After the transaction process is completed, the upper level apparatus 10 notifies a process completion to the card processor 100. Upon reception of this notice at the communication unit 6, the control unit 1 executes the eject process (Step S3 in Fig. 4) for the card 50 in accordance with the procedure to be described hereunder.

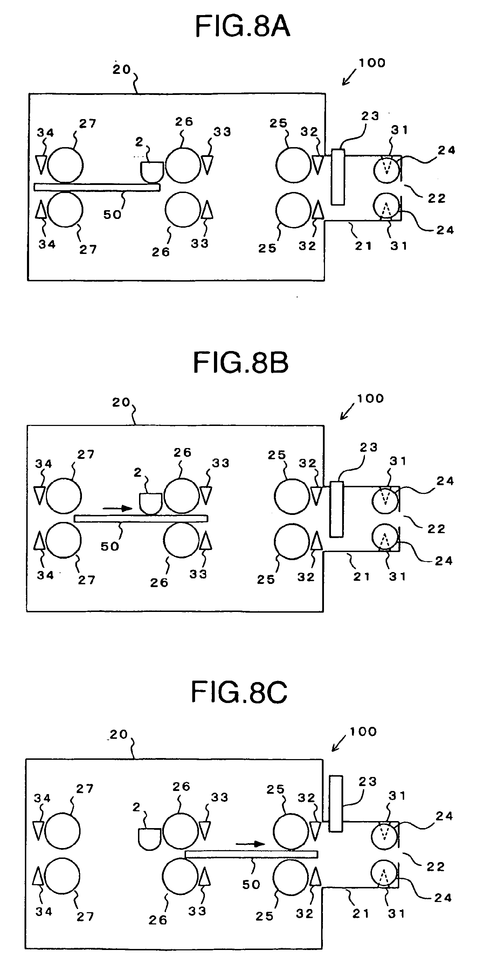

Fig. 6 is a flow chart illustrating the detailed procedure of the eject process for the magnetic card at Step S3 shown in Fig. 4. As the eject process starts, the control unit 1 drives the motor 4 continuously in a reverse rotation operation so that the transport rollers 24 to 27 are also driven continuously in the reverse rotation operation (Step S31). As the transport rollers 24 to 27 rotate in a reverse direction, the card 50 at the position shown in Fig. 8A (the same position as that shown in Fig. 7H) is transported continuously by the transport rollers 26 and 27 in an eject direction (right direction in the figure) as shown in Fig. 8B. Next, it is judged whether the sensor 32 turns ON (Step S32). As shown in Fig. 8C, as the front end (right end) of the card 50 reaches the position of the sensor 32, the sensor 32 detects the card 50 and turns ON (YES at Step S32). In response to this, the shutter solenoid 5 opens the shutter 23 (Step S33). The card 50 is therefore transported toward the card slot 22.

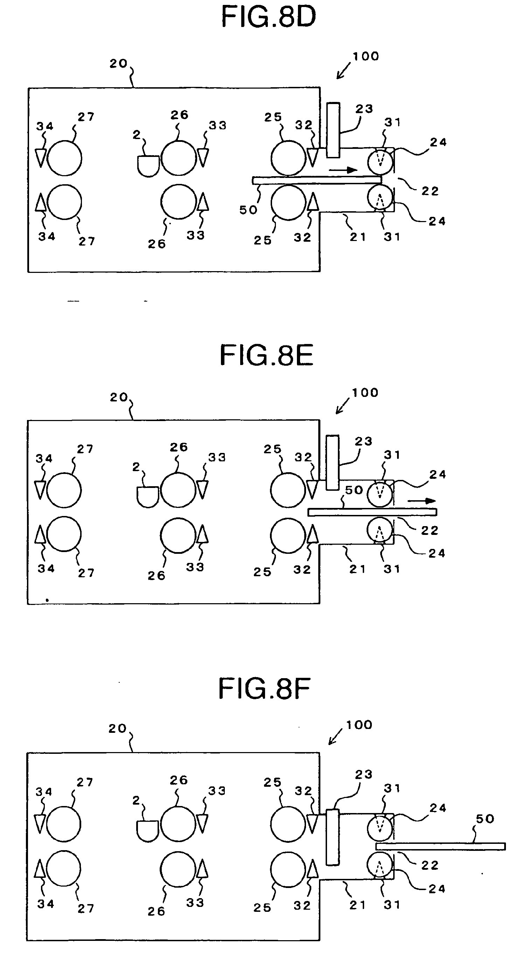

After the shutter 23 opens, the control unit 1 judges whether the sensor 31 turns ON (Step S34). As shown in Fig. 8D, as the card 50 is transported to the position of the sensor 31, the sensor 31 detects the card 50 and turns ON (YES at Step S34). In response to ON of the sensor 31, driving the motor 4 is switched from continuous driving to intermittent driving, and the motor 4 is driven intermittently in the reverse rotation operation. The transport rollers 24 to 27 are therefore driven intermittently in the reverse rotation operation (Step S35). Therefore, the card 50 is transported intermittently in the right direction in the figure by the intermittently rotating transport rollers 24 and 25, to thereby eject the card from the card slot 22 to the external, as shown in Fig. 8E. Driving the motor 4 is executed in the same way as that shown in Figs. 18A and 18B described previously.

After the transport rollers are started being intermittently rotated at Step S35, the control unit 1 monitors whether a predetermined time has elapsed since the sensor 31 turned ON (Step S36). If the predetermined time has elapsed (YES at Step S36), rotation of the transport rollers 24 to 27 is stopped (Step S37), and the shutter 23 is closed (Step S38). Therefore, as shown in Fig. 8F, the card 50 is returned via the card slot 22 in the state that the back end is held by a pair of transport rollers 24. With the processes described above, a series of transaction processes is completed at ATM using the magnetic card 50.

As described above, in the procedure shown in Fig. 6, intermittent transportation is performed until the card 50 is nearly ejected from the card slot 22 by the transport rollers 24 mounted near the card slot 22. Therefore, as shown in Fig. 9, even if the skimmer SK is mounted on the card slot 22, information skimmed with the magnetic head H of the skimmer SK during card ejection is information to be read after the card 50 departs from the transport rollers 24, i.e., only little information recorded on the magnetic stripe 51 in the range (a), and most of information recorded in the range b will not be skimmed. It is therefore possible to prevent skimming during card ejection as much as possible, even if the card 50 has a small amount of effective data.

Further, in the procedure shown in Fig. 6, at the stage while the card 50 is ejected to the outside of the main body 20 of the card processor, the card 50 is transported continuously until the card is transported to the position of the sensor 31 mounted near the card slot 22, and the card 50 is transported intermittently after the card 50 is transported to the position of the sensor 31. The position of the sensor 31 is set to a limit position where there is a risk that magnetic information of the card 50 is skimmed, i.e., to a front end (right end) position of the card 50 when magnetic information of the card 50 can be acquired normally with the skimmer SK. With this setting, the card 50 is transported continuously in the state that there is no risk of magnetic information skimming, to thereby shorten a card ejection time, whereas the card 50 is transported intermittently in the state that there is a risk of magnetic information skimming, to prevent skimming.

As described above, according to the first embodiment, even if there is a distance from the card slot 22 to transport rollers 25 because of existence of the card insertion unit 21, the card 50 can be started being intermittently transported by the transport rollers 24 mounted near the card slot 22, approximately at the same time of card insertion. It is therefore possible to prevent skimming more effectively than the conventional example in which intermittent transportation starts when the card 50 reaches the transport rollers 25. Further as apparent from comparison between Figs. 9 and 22, even if magnetic information of the card 50 is skimmed, the skimming capable range a occupies a dominantly larger ratio than the skimming incapable range b in the case of Fig. 22, whereas in the case of the present invention (Fig. 9), the skimming incapable range b occupies a dominantly larger ratio than the skimming capable range a. Therefore, even if magnetic information is acquired illegally by skimming, this skimming damage can be suppressed minimum.

Further, according to the first embodiment, near at the card slot 22, since the sensor 31 for detecting insertion of the card 50 is mounted at the position of the transport rollers 24, the timing when intermittent transportation of the card 50 starts can be set faster and the skimming capable range a of the card 50 can be made smaller, than that the sensor 31 is mounted inner than the transport rollers 24 as viewed from the card slot 22. In addition, a length (length in the right/left direction in the figure) can be reduced more than that the sensor 31 is mounted outer than the transport rollers 24 as viewed from the card slot 22.

Fig. 10 is a diagram showing the outline structure of a card processor according to the second embodiment of the present invention. In the first embodiment, the sensor 31 for detecting the card 50 is mounted near the card slot 22, and in response to detection of the card 50 with the sensor 31, the transport rollers 24 transport the card 50 intermittently. In the second embodiment, the sensor 31 is not provided, and the transport rollers 24 transport the card 50 in accordance with a command from the upper level apparatus 10.

In Fig. 10, reference numeral 100 represents a card processor, reference numeral 200 represents a housing of ATM, reference numeral 50 represents a card such as shown in Fig. 2, reference numeral 20 represents a main body of the card processor 100, reference numeral 21 represents a card insertion unit, reference numeral 22 represents a card slot, reference numerals 24 to 27 represent transport rollers, reference numerals 32 to 34 represent sensors, and reference numeral 2 represents a magnetic head. These components are similar to those described with reference to Fig. 1, and the detailed description thereof is omitted. A different point of the structure shown in Fig. 10 from that shown in Fig. 1 resides in that the sensor 31 and shutter 23 shown in Fig. 1 are omitted. However, the shutter 23 may be used. A block diagram of the card processor is the same as that shown in Fig. 3, except that the shutter solenoid 5 is omitted, and the detailed description thereof is also omitted.

Next, description will be made on the operation of the card processor 100 shown in Fig. 10. The overall outline operation is the same as that illustrated in the flow chart of Fig. 4. Namely, upon reception of a process start command from the upper level apparatus 10 (Step S1), the card processor 100 fetches the card 50 and reads information (Step S2), and after completion of this process, executes an eject process for the card 50 (Step S3).

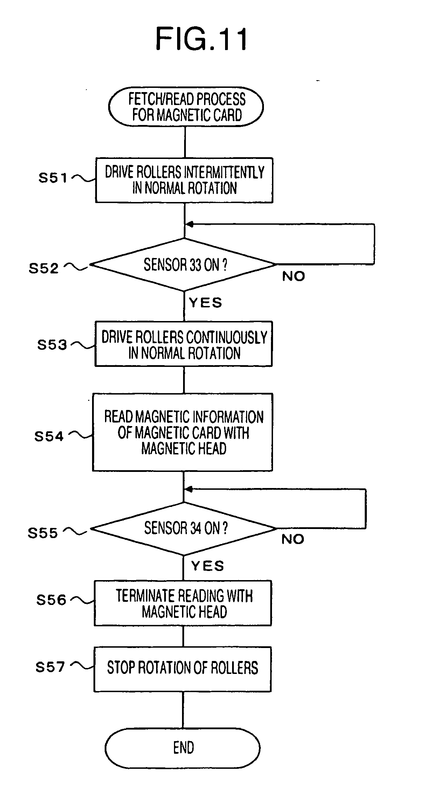

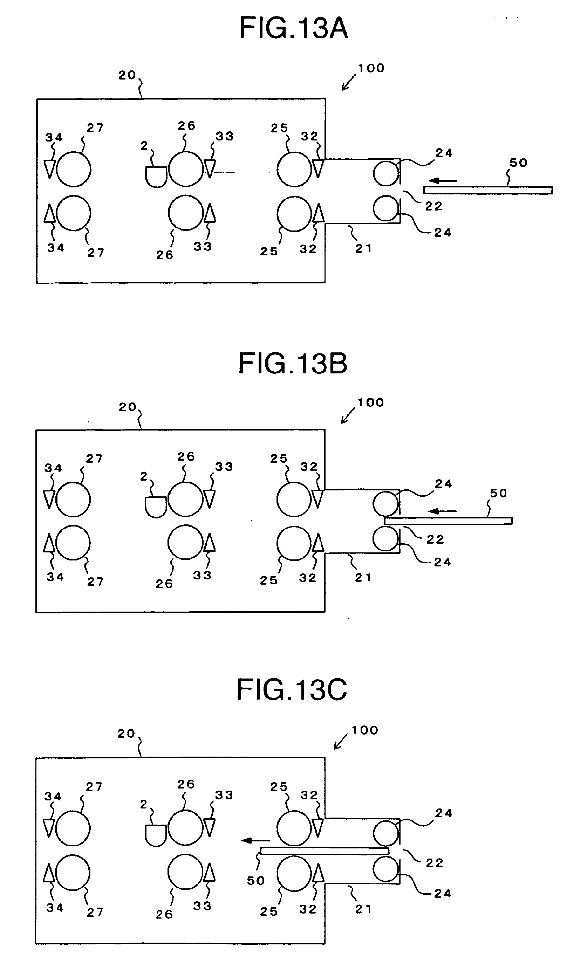

Fig. 11 is a flow chart illustrating the detailed procedure of a magnetic card fetch/read process at Step S2 shown in Fig. 4. This procedure will now be described. Upon reception of a process start command from the upper level apparatus 10 at Step S1 shown in Fig. 4, the control unit 1 drives immediately the motor 4 in a normal rotation operation so that the transport rollers 24 to 27 are also intermittently driven in the normal rotation operation (Step S51). Namely, in this embodiment, as shown in Fig. 13A, the transport rollers 24 to 27 are driven intermittently before the card 50 is inserted into the card slot 22. Therefore, as shown in Fig. 13B, as the card 50 is inserted into the card slot 22 to the position of the transport rollers 24, while the card 50 is intermittently transported by the transport rollers 24 immediately after the card 50 is inserted into the card slot 22, the card 50 is fetched to the inside of the main body 20 via the card slot 21 as shown in Fig. 13C. In this case, a control amount (drive voltage) such as shown in Fig. 18A is supplied to the motor 4 from the motor drive circuit of the control unit 1 so that the motor 4 performs an intermittent rotation operation such as shown in Fig. 19A. This operation has been described earlier.

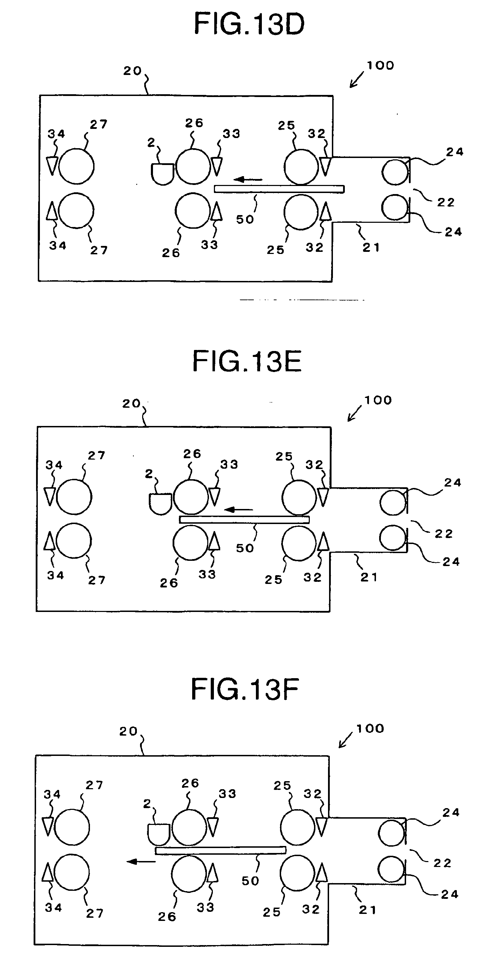

Next, it is judged whether the sensor 33 turns ON (Step 52). As shown in Fig. 13D, as the card 50 is transported to the position of the sensor 33, the sensor 33 detects the card 50 and turns ON (YES at Step S52). In response to this, driving the motor 4 is switched from intermittent driving to continuous driving so that the motor 4 is driven continuously in a normal rotation operation. The transport rollers 24 to 27 are therefore driven continuously in the normal rotation operation (Step S53). As a result, the card 50 is transported continuously in the left direction in the figure by the continuously rotating transport rollers 25 and 26 as shown in Fig. 13E. As shown in Fig. 13F, as the card 50 reaches the position of the magnetic head 2, the magnetic head 2 starts reading magnetic information (information recorded in the magnetic stripe 51) of the card 50 (Step S54).

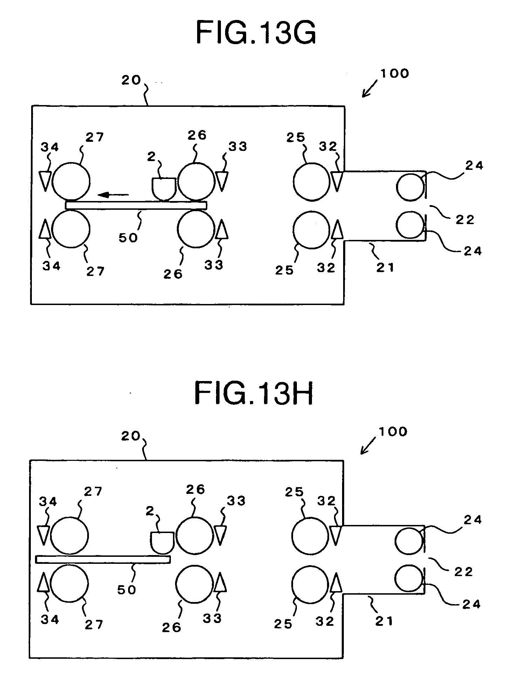

Thereafter, as shown in Fig. 13G, the card 50 is transported continuously by the transport rollers 26 and 27, and during this stage, magnetic information of the card 50 is read with the magnetic head 2. The control unit 1 judges whether the sensor 34 turns ON (Step S55). As shown in Fig. 13H, as the card 50 is transported to the position of the sensor 34, the sensor 34 detects the card 50 and turns ON (YES at Step S55). In response to this, magnetic information reading with the magnetic head 2 is terminated (Step S56). As the sensor 34 turns ON, the control unit 1 judges that the card 50 was transported to the innermost of the card processor 100, and stops the motor 4. Therefore, rotation of the transport rollers 24 to 27 stops also (Step S57).

As described above, in the procedure shown in Fig. 11, approximately at the same time of card insertion, the card 50 is transported intermittently by the transport rollers 24 mounted near the card slot 22. Therefore, similar to the case shown in Fig. 9, even if the skimmer SK is mounted on the card slot 22, information skimmed with the magnetic head H of the skimmer SK during card insertion is information to be read until the card 50 reaches the transport rollers 24, i.e., only little information recorded on the magnetic stripe 51 in the range a, and most of information recorded in the range b will not be skimmed. It is therefore possible to prevent skimming during card insertion as much as possible, even if the card 50 has a small amount of effective data.

Further, in the procedure shown in Fig. 11, at the stage while the card 50 is fetched to the inside of the main body 20 of the card processor, the card 50 inserted into the card slot 22 is first transported intermittently, and after the card 50 is transported to the position of the sensor 33 inside the main body 20, the card 50 is transmitted continuously. The position of the sensor 33 is set to a limit position where there is no risk that magnetic information of the card 50 is skimmed, i.e., to a front end (left end) position of the card 50 when the card 50 is fetched to the card insertion unit 21 at an inner position where magnetic information of the card 50 cannot be acquired normally with the skimmer SK. With this setting, the card 50 is transported intermittently in the state that there is a risk of magnetic information skimming, to thereby prevent skimming, whereas the card 50 is transported continuously in the state that there is no risk of magnetic information skimming, to thereby fetch the card to the inside of the main body 20 at high speed.

After driving the motor 4 is stopped, the control unit 1 transmits information read from the card 50 with the magnetic head 2 to the upper level apparatus 10 via the communication unit 6. In accordance with the received card information, the upper level apparatus 10 performs a predetermined transaction process (e.g., cash payment). After the transaction process is completed, the upper level apparatus 10 notifies a process completion to the card processor 100. Upon reception of this notice at the communication unit 6, the control unit 1 executes the eject process (Step S3 in Fig. 4) for the card 50 in accordance with the procedure to be described hereunder.

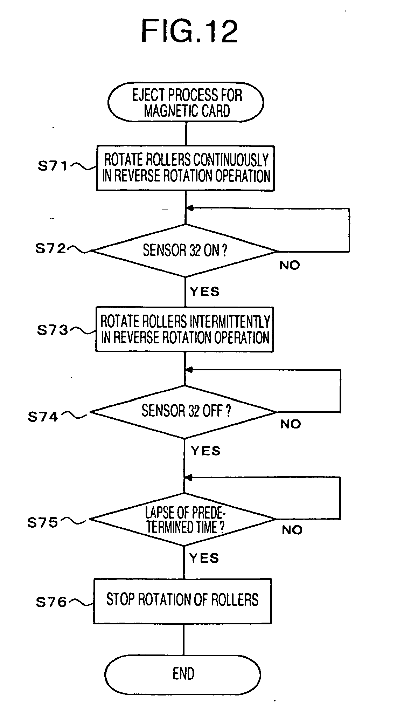

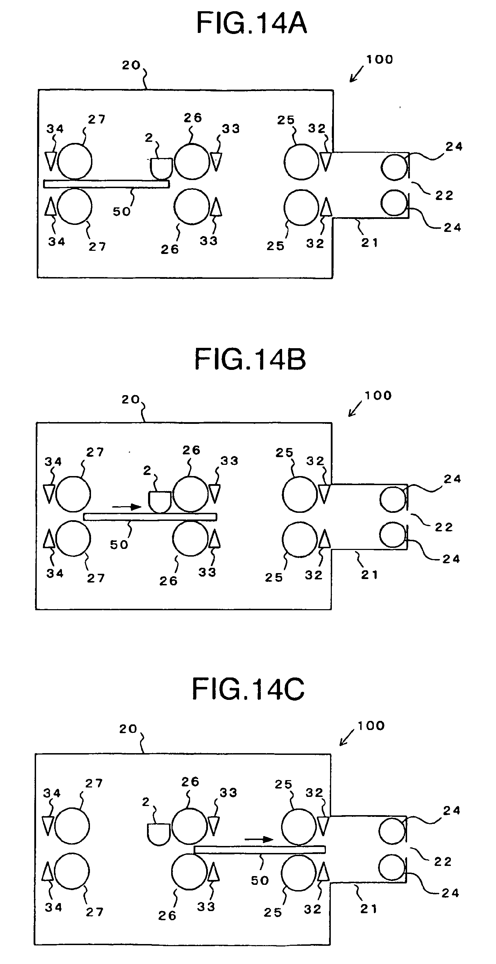

Fig. 12 is a flow chart illustrating the detailed procedure of the eject process for the magnetic card at Step S3 shown in Fig. 4. As the eject process starts, the control unit 1 drives the motor 4 continuously in a reverse rotation operation so that the transport rollers 24 to 27 are also driven continuously in the reverse rotation operation (Step S71). As the transport rollers 24 to 27 rotate in a reverse direction, the card 50 at the position shown in Fig. 14A (the same position as that shown in Fig. 13H) is transported continuously by the transport rollers 26 and 27 in the right direction as shown in Fig. 14B. Next, it is judged whether the sensor 32 turns ON (Step S72). As shown in Fig. 14C, as the front end (right end) of the card 50 reaches the position of the sensor 32, the sensor 32 detects the card 50 and turns ON (YES at Step S72).

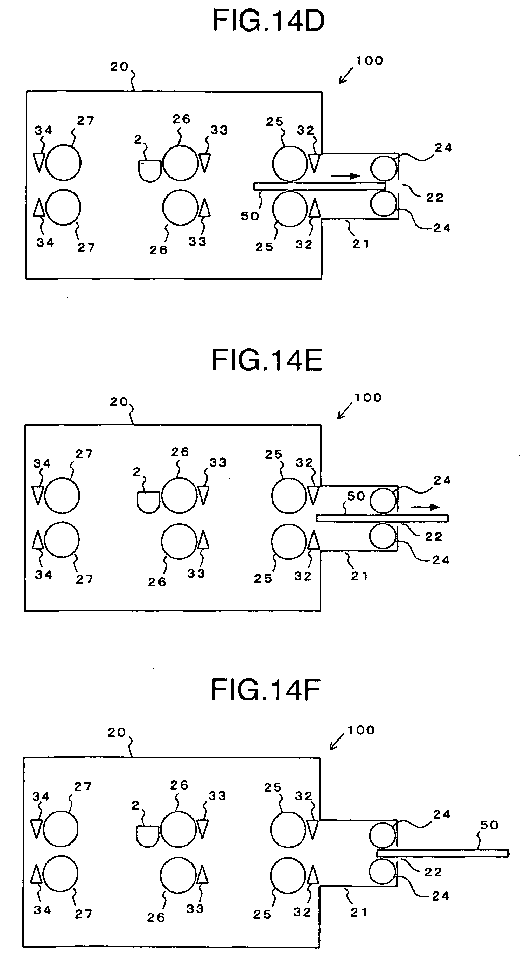

In response to ON of the sensor 32, driving the motor 4 is switched from continuous driving to intermittent driving, and the motor 4 is driven intermittently in the reverse rotation operation. The transport rollers 24 to 27 are therefore driven intermittently in the reverse rotation operation (Step S73). Therefore, the card 50 is transported intermittently in the right direction in the figure by the intermittently rotating transport rollers 24 and 25, to be transported to the card slot 22, as shown in Fig. 14D. Driving the motor 4 is executed in the same way as that shown in Figs. 18A and 19A described previously.

After the transport rollers are started being intermittently rotated at Step S73, the control unit 1 judges whether the sensor 32 turns OFF (Step S74). As shown in Fig. 14E, as the back end (left end) of the card 50 passes the position of the sensor 32, the sensor 32 turns OFF (YES at Step S74). As the sensor 32 turns OFF, then the control unit 1 monitors whether a predetermined time has elapsed (Step S75). During this monitoring, intermittent driving of the transport rollers 24 at Step S73 continues so that the card 50 is transported intermittently by the transport rollers 24 and ejected from the card slot 22 to the external. As the predetermined time has elapsed (YES at Step S75), the control unit 1 stops the motor 4 and rotation of the transport rollers 24 to 27 (Step S76). Therefore, as shown in Fig. 14F, the card 50 is returned from the card slot 22 in the state that the back end of the card is held by a pair of transport rollers 24. With the above processes, a series of transaction processes is completed at ATM using the card 50.

As described above, in the procedure shown in Fig. 12, intermittent transportation is performed until the card 50 is nearly ejected from the card slot 22 by the transport rollers 24 mounted near the card slot 22. Therefore, as shown in Fig. 9, even if the skimmer SK is mounted on the card slot 22, information skimmed with the magnetic head H of the skimmer SK during card ejection is information to be read after the card 50 departs from the transport rollers 24, i.e., only little information recorded on the magnetic stripe 51 in the range (a), and most of information recorded in the range b will not be skimmed. It is therefore possible to prevent skimming during card ejection as much as possible, even if the card 50 has a small amount of effective data.

Further, in the procedure shown in Fig. 12, at the stage while the card 50 is ejected, the card 50 is transported continuously until the card 50 is transported to the position of the sensor 32, and the card 50 is transported intermittently after the card 50 is transported to the position of the sensor 32. Therefore, skimming can be prevented by intermittent transportation of the card 50 and a card ejection time can be shortened by continuous transportation of the card 50.

As described above, according to the second embodiment, even if there is a distance from the card slot 22 to transport rollers 25 because of existence of the card insertion unit 21, the card 50 can be started being intermittently transported by the transport rollers 24 mounted near the card slot 22, approximately at the same time of card insertion. It is therefore possible to prevent skimming more effectively than the conventional example in which intermittent transportation starts when the card 50 reaches the transport rollers 25. Further, as already described through comparison between Figs. 9 and 22, even if information is skimmed, the amount of information is little so that a damage can be suppressed minimum according to the invention.

Further, according to the second embodiment, since intermittent transportation of the card 50 by the transport rollers 24 is performed in response to a command from the upper level apparatus 10, the sensor 31 near the card slot 22 as in the first embodiment is not necessary so that the cost can be reduced correspondingly.

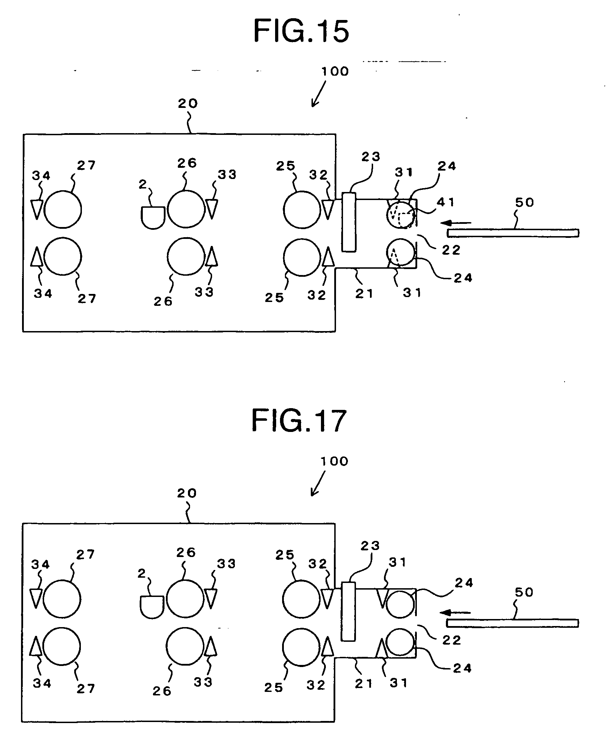

Fig. 15 is a diagram showing the outline structure of a card processor according to the third embodiment of the present invention. In Fig. 15, like parts to those shown in Fig. 1 are represented by using identical reference numerals. A different point of a card processor 100 shown in Fig. 15 from that shown in Fig. 1 resides in that in addition to a sensor 31, a magnetic stripe detection sensor 41 is provided. This magnetic stripe detection sensor 41 constitutes judgement means according to the embodiment of the present invention. Other constituent elements are similar to those shown in Fig. 1 and the detailed description of Fig. 15 is omitted.

In the third embodiment, the magnetic stripe detection sensor 41 judges whether or not the inserted card 50 is a magnetic card. The magnetic stripe detection sensor 41 is constituted of a magnetic head. If the card 50 is a magnetic card, the magnetic head reads magnetic information of the magnetic stripe and outputs a read signal, whereas if the card 50 is not a magnetic card, the magnetic head cannot read magnetic information and does not output a read signal. Therefore, it is possible to judge from presence/absence of the read signal from the sensor 41 whether the card 50 is a magnetic card. Since the sensor 41 has also a function of detecting insertion of the magnetic card, the sensor 31 of this embodiment may be omitted.

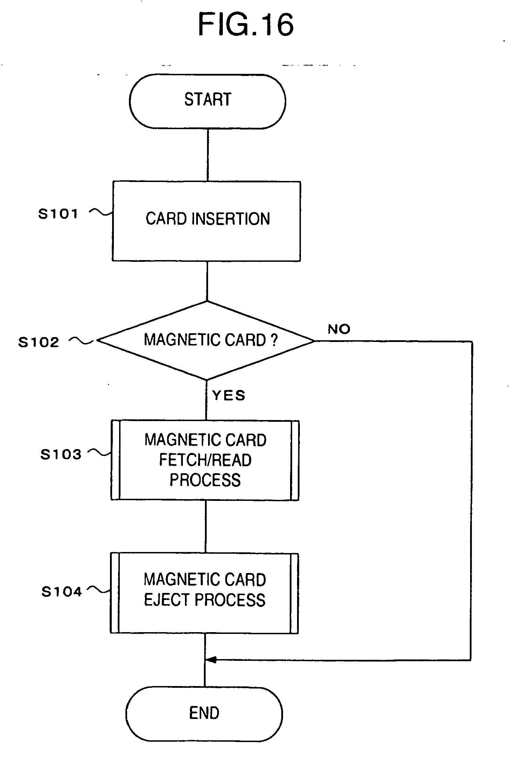

Fig. 16 is a flow chart illustrating the outline operation of the card processor 100 shown in Fig. 15. Similar to Fig. 4, it is assumed herein that the upper level apparatus 10 is ATM and the card processor 100 is mounted in ATM. As a transaction is to be conducted at ATM by using the card 50, a user performs a predetermined operation by using a customer panel, the upper level apparatus 10 transmits a transaction start command to the card processor 100 and the card processor 100 starts card processing. First, as the card 50 is inserted into the card slot 22 (Step S101), it is judged from an output from the magnetic stripe detection sensor 41 whether the card 50 is a magnetic card (Step S102). If the card 50 is a magnetic card (YES at Step S102), the flow advances to Step S103 whereat a magnetic card fetch/read process is executed. After this process is completed, a magnetic card eject process is executed (Step S104). The detailed procedures of Steps S103 and S104 are similar to those shown in Figs. 5 and 6, and the description thereof is omitted. If the card 50 is not a magnetic card (NO at Step S102), the procedure is terminated or the transport rollers 24 are rotated reversely to return the card 50.

According to the above-described third embodiment, skimming can be prevented effectively similar to the first and second embodiments. Further, it is judged whether the card 50 is a magnetic card before the card 50 is fetched to the inside of the card processor 100, and only if the card 50 is a magnetic card, the card 50 is fetched. Therefore, there is no fear that a card different from the magnetic card, foreign matters and the like are fetched erroneously, and it is possible to prevent beforehand jamming of a card in the card processor 100 and damages of a transport mechanism, magnetic head 2 and the like.

The present invention can adopt various other embodiments in addition to the embodiments described above. For example, although the sensor 31 is mounted at the same position as that of the transport rollers 24 in the first embodiment (Fig. 1), the position of the sensor 31 is not limited to any specific position if the sensor is mounted near the transport rollers 24. For example, as shown in Fig. 17, the sensor 31 may be mounted at a position near the transport rollers 24 on the side of the shutter 23.

In the embodiments described above, during fetching the card 50, card transportation is switched from intermittent transportation to continuous transportation at the time when the sensor 33 turns ON (Steps S14 and S15 in Fig. 5, Steps S52 and S53 in Fig. 1). Alternatively, card transportation may be switched from intermittent transportation to continuous transportation at the time when the sensor 31 turns OFF or when the sensor 32 turns OFF.

In the first embodiment, during ejecting the card 50, transportation of the card 50 is switched from continuous transportation to intermittent transportation at the time when the sensor 31 turns ON (Steps S34 and S35 in Fig. 6). Alternatively, transportation of the card 50 may be switched from continuous transportation to intermittent transportation at the time when the sensor 33 turns OFF.

In the second embodiment, during ejecting the card 50, transportation of the card 50 is switched from continuous transportation to intermittent transportation at the time when the sensor 32 turns ON (Steps S72 and S73 in Fig. 12). Alternatively, transportation of the card 50 may be switched from continuous transportation to intermittent transportation, at the time when a timer time has elapsed corresponding to the time required for the front end (right end) of the card 50 moves from the position of the sensor 32 to the card slot 22, by starting a timer at the time when the sensor 32 turns ON.

In each of the embodiments described above, an example shown in Figs. 18A and 18B is used as the intermittent transportation method for the card 50. Alternatively, control amounts (drive voltages) such as shown in Figs. 18B to 18D may be supplied to the motor 4 to perform intermittent rotation operations of the motor 4 such as shown in Figs. 19B to 19D. In Fig. 19B, the motor 4 rotates normally by a two-unit rotation amount during one unit time and rotates reversely by one unit rotation amount during next one unit time, these operations being repeated. In Fig. 19C, the motor 4 rotates normally by a two-unit rotation amount during one unit time, stops during next one unit time, rotates reversely by one unit rotation amount during next one unit time, and stops during next one unit time, these operations being repeated. In Fig. 19D, the rotation time and stop time shown in Fig. 19A are made irregular to repeat randomly rotation and stop. In Figs. 19B and 19C, the rotation time and stop time may be made irregular to repeat randomly rotation and stop.

In each of the embodiments described above, the sensors 31 to 34 constituted of photo microsensors are used illustratively as position detection means for detecting a position of the card 50. The position detection means may be a rotary encoder which outputs a signal corresponding to a revolution amount of the transport rollers 24 to 27 and motor 4. In this case, a revolution amount of the transport rollers or motor is calculated from an output signal of the rotary encoder, and a position of the card 50 can be detected from the calculated revolution amount. Instead of the sensor and rotary encoder, a timer and a calculator may be used as the position detection means. In this case, a motion distance of the card is calculated by the calculator in accordance with a timer measurement time and a card transportation speed to detect a position of the card from the calculated motion distance.

Further, in each of the embodiments described above, the card processor 100 is mounted in ATM illustratively. In addition to ATM, the card processor of the present invention may be mounted in various apparatus such as CD (automatic cash dispenser), automatic ticket seller, and goods seller.

It should be further understood by those skilled in the art that although the foregoing description has been made on embodiments of the invention, the invention is not limited thereto and various changes and modifications may be made without departing from the scope of the appended claims.

## Claims

1. A card reader for processing a card (50) recorded with magnetic information, said reader comprising:
first transport means (25-27) disposed in a main body (20) of the card reader for transporting said card;
second transport means (24) for transporting the card; and
a card insertion unit (21) mounted on said main body on a front side thereof for guiding said card inserted into a card slot (22) to said first transport means;
**characterized in that**
the card insertion unit protrudes from the front side of the main body the card slot being provided at the front side of the card insertion unit; and
the second transport means (24) are disposed in the card insertion unit at the end portion of the card insertion unit on the side of the card slot , and are adapted to intermittently transport the card from the moment immediately after it has been inserted into the card slot and/or until the moment immediately before it is ejected from the card slot.

2. The card reader according to claim 1, wherein detection means (31) for detecting said card (50) are disposed near said card slot (22), and said second transport means (24) are adapted to intermittently transport said card in response to detection of said card by said detection means.

3. The card reader according to claim 2, wherein said detection means are disposed at generally the same position as said second transport means (24).

4. The card reader according to claim 2, wherein said detection means (31) are adapted to detect presence/absence of a magnetic stripe of said card (50) inserted into said cart slot.

5. The card reader according to claim 1, wherein judgement means (41) for judging whether said inserted card (50) is a magnetic card is disposed near said card slot (22), and said second transport means (24) are adapted to intermittently transport said card in response to that said judgement means judges that said card is a magnetic card.

6. The card reader according to claim 1, wherein communication means (6) are provided for communicating with an upper level apparatus, and said second transport means (24) are adapted to transport said card in response to reception of a command from said upper level apparatus by said communication means.

7. The card reader according to claim 1, wherein a shutter (23) capable of being opened and closed and detection means (31) disposed near said card slot (22) for detecting said card (50) are provided, and when said detection means detect said card inserted into said card slot, said second transport means (24) are adapted to intermittently transport said card and said shutter is adapted to be opened.

8. The card reader according to claim 7, wherein second detection means (32-34) disposed in said main body (20) for detecting said card (50) are provided, and when said second detection means (32-34) detect said card transported from said shutter (23), the card reader is adapted to switch from intermittent transportation to continuous transportation by said first transport means (25-27).

9. The card reader according to claim 7, wherein third detection means disposed near said shutter (23) for detecting said card (50) are provided, and wherein the card reader is adapted to close the shutter (23), when said third detection means does not detect the card anymore after it previously detected the insertion of said card into said card slot (22).

## Patentansprüche

1. Kartenlesegerät zum Verarbeiten einer Karte (50), auf der magnetische Informationen aufgezeichnet sind, wobei das Lesegerät umfasst:
eine in einem Hauptkörper (20) des Kartenlesegeräts angeordnete erste Transporteinrichtung (25-27) zum Transportieren der Karte;
eine zweite Transporteinrichtung (24) zum Transportieren der Karte; und
eine auf dem Hauptkörper auf dessen Vorderseite angebrachte Karteneinfuhreinheit (21) zum Leiten der in einen Kartenschlitz (22) eingeführten Karte zur ersten Transporteinrichtung;
**gekennzeichnet dadurch, dass**
die Karteneinfuhreinheit von der Vorderseite des Hauptkörpers hervorragt, wobei der Kartenschlitz auf der Vorderseite der Karteneinfuhreinheit vorgesehen ist; und
die zweite Transporteinrichtung (24) in der Karteneinfuhreinheit am Endabschnitt der Karteneinfuhreinheit auf der Seite des Kartenschlitzes angeordnet ist und dazu ausgelegt ist, die Karte in unterbrochener Weise von dem Moment an, unmittelbar nachdem sie in den Kartenschlitz eingeführt worden ist, und/oder bis zu dem Moment, unmittelbar bevor sie aus dem Kartenschlitz ausgeworfen wird, zu transportieren.

2. Kartenlesegerät nach Anspruch 1, wobei eine Detektionseinrichtung (31) zum Detektieren der Karte (50) nahe dem Kartenschlitz (22) angeordnet ist und die zweite Transporteinrichtung (24) dazu ausgelegt ist, die Karte auf die Detektion der Karte durch die Detektionseinrichtung hin in unterbrochener Weise zu transportieren.

3. Kartenlesegerät nach Anspruch 2, wobei die Detektionseinrichtung an der im Wesentlichen gleichen Position wie die zweite Transporteinrichtung (24) angeordnet ist.

4. Kartenlesegerät nach Anspruch 2, wobei die Detektionseinrichtung (31) dazu ausgelegt ist, das Vorhandensein/Nichtvorhandensein eines Magnetstreifens der in den Kartenschlitz eingeführten Karte (50) zu detektieren.

5. Kartenlesegerät nach Anspruch 1, wobei eine Beurteilungseinrichtung (41) zum Beurteilen, ob die eingeführte Karte (50) eine Magnetkarte ist, nahe dem Kartenschlitz (22) angeordnet ist und die zweite Transporteinrichtung (24) dazu ausgelegt ist, die Karte daraufhin in unterbrochener Weise zu transportieren, dass die Beurteilungseinrichtung beurteilt, dass die Karte eine Magnetkarte ist.

6. Kartenlesegerät nach Anspruch 1, wobei eine Kommunikationseinrichtung (6) zum Kommunizieren mit einer übergeordneten Vorrichtung vorgesehen ist und die zweite Transporteinrichtung (24) dazu ausgelegt ist, die Karte auf den Empfang einer Anweisung von der übergeordneten Vorrichtung über die Kommunikationseinrichtung hin zu transportieren.

7. Kartenlesegerät nach Anspruch 1, wobei eine Verschlussvorrichtung (23), die geöffnet und verschlossen werden kann, und eine nahe dem Kartenschlitz (22) angeordnete Detektionseinrichtung (31) zum Detektieren der Karte (50) vorgesehen sind und wobei die zweite Transporteinrichtung (24), wenn die Detektionseinrichtung die in den Kartenschlitz eingeführte Karte detektiert, dazu ausgelegt ist, die Karte in unterbrochener Weise zu transportieren, und die Verschlussvorrichtung dazu ausgelegt ist, geöffnet zu werden.

8. Kartenlesegerät nach Anspruch 7, wobei eine im Hauptkörper (20) angeordnete zweite Detektionseinrichtung (32-34) zum Detektieren der Karte (50) vorgesehen ist und das Kartenlesegerät, wenn die zweite Detektionseinrichtung (32-34) die von der Verschlussvorrichtung (23) aus transportierte Karte detektiert, dazu ausgelegt ist, von unterbrochenem Transport auf durchgehenden Transport durch die erste Transporteinrichtung (25-27) zu schalten.

9. Kartenlesegerät nach Anspruch 7, wobei eine nahe der Verschlussvorrichtung (23) angeordnete dritte Detektionseinrichtung zum Detektieren der Karte (50) vorgesehen ist und wobei das Kartenlesegerät dazu ausgelegt ist, die Verschlussvorrichtung (23) zu schließen, wenn die dritte Detektionseinrichtung die Karte nicht mehr detektiert, nachdem sie zuvor die Einführung der Karte in den Kartenschlitz (22) detektiert hat.

## Revendications

1. Lecteur de carte pour traiter une carte (50) enregistrée avec des informations magnétiques, ledit lecteur comportant :
des premiers moyens de transport (25-27) disposés dans un corps principal (20) du lecteur de carte pour transporter ladite carte,
des deuxièmes moyens de transport (24) pour transporter la carte, et
une unité d'insertion de carte (21) montée sur ledit corps principal sur un côté avant de celui-ci pour guider ladite carte insérée dans une fente de carte (22) vers lesdits premiers moyens de transport,
**caractérisé en ce que**
l'unité d'insertion de carte fait saillie depuis le côté avant du corps principal, la fente de carte étant agencée au niveau du côté avant de l'unité d'insertion de carte, et
les deuxièmes moyens de transport (24) sont disposés dans l'unité d'insertion de carte dans la partie d'extrémité de l'unité d'insertion de carte sur le côté de la fente de carte, et sont adaptés pour transporter de manière intermittente la carte à partir du moment qui suit immédiatement son insertion dans la fente de carte et/ou jusqu'au moment qui précède immédiatement son éjection de la fente de carte.

2. Lecteur de carte selon la revendication 1, dans lequel des moyens de détection (31) pour détecter ladite carte (50) sont disposés à proximité de ladite fente de carte (22), et lesdits deuxièmes moyens de transport (24) sont adaptés pour transporter de manière intermittente ladite carte en réponse à la détection de ladite carte par lesdits moyens de détection.

3. Lecteur de carte selon la revendication 2, dans lequel lesdits moyens de détection sont disposés généralement à la même position que lesdits deuxièmes moyens de transport (24).

4. Lecteur de carte selon la revendication 2, dans lequel lesdits moyens de détection (31) sont adaptés pour détecter la présence/l'absence d'une bande magnétique de ladite carte (50) insérée dans ladite fente de carte.

5. Lecteur de carte selon la revendication 1, dans lequel des moyens de détermination (41) pour déterminer si ladite carte insérée (50) est une carte magnétique sont disposés à proximité de ladite fente de carte (22), et lesdits deuxièmes moyens de transport (24) sont adaptés pour transporter de manière intermittente ladite carte en réponse à la détermination par lesdits moyens de détermination que ladite carte est une carte magnétique.

6. Lecteur de carte selon la revendication 1, dans lequel des moyens de communication (6) sont fournis pour communiquer avec un dispositif de niveau supérieur, et lesdits deuxièmes moyens de transport (24) sont adaptés pour transporter ladite carte en réponse à la réception d'une instruction en provenance dudit dispositif de niveau supérieur par lesdits moyens de communication.

7. Lecteur de carte selon la revendication 1, dans lequel un obturateur (23) pouvant être ouvert et fermé et des moyens de détection (31) disposés à proximité de ladite fente de carte (22) pour détecter ladite carte (50) sont fournis, et lorsque lesdits moyens de détection détectent ladite carte insérée dans ladite fente de carte, lesdits deuxièmes moyens de transport (24) sont adaptés pour transporter de manière intermittente ladite carte et ledit obturateur est adapté pour être ouvert.

8. Lecteur de carte selon la revendication 7, dans lequel les seconds moyens de détection (32-34) disposés dans ledit corps principal (20) pour détecter ladite carte (50) sont fournis, et lorsque lesdits seconds moyens de détection (32-34) détectent ladite carte transportée par ledit obturateur (23), le lecteur de carte est adapté pour basculer d'un transport intermittent vers un transport continu par lesdits premiers moyens de transport (25-27).

9. Lecteur de carte selon la revendication 7, dans lequel des troisièmes moyens de détection disposés à proximité dudit obturateur (23) pour détecter ladite carte (50) sont fournis, et dans lequel le lecteur de carte est adapté pour fermer l'obturateur (23), lorsque lesdits troisièmes moyens de détection ne détectent plus la carte après qu'ils aient détecté au préalable l'insertion de ladite carte dans ladite fente de carte (22).
